# EUROPÄISCHE PATENTSCHRIFT

(11) **EP 0 861 572 B1**
(45) Veröffentlichungstag und Bekanntmachung des Hinweises auf die Patenterteilung: **22.08.2001**
(21) Anmeldenummer: 97931743.5
(22) Anmeldetag: 02.07.1997
(51) Int. Cl.: H05B 3/16, A45D 20/30

(54) **ELEKTRISCHE HEIZEINRICHTUNG**
ELECTRIC HEATING DEVICE
DISPOSITIF DE CHAUFFAGE ELECTRIQUE

(30) Priorität: 26.08.1996 DE 19634420
(43) Veröffentlichungstag der Anmeldung: 02.09.1998
(73) Patentinhaber: Braun GmbH, Kronberg (DE)
(72) Erfinder: BEHRENDT, Jürgen, D-65510 Idstein (DE); WONKA, Boris, D-63263 Neu Isenburg (DE); ROLF, Wilfried, D-65594 Runkel (DE); JUNG, Robert, D-61169 Friedberg (DE)
(86) Internationale Anmeldenummer: EP9703476
(87) Internationale Veröffentlichungsnummer: WO9809479

(56) Entgegenhaltungen:
- DE-B- 1 080 744
- DE-C- 248 792
- DE-C- 410 879
- DE-U- 8 801 056

## Beschreibung

Die vorliegende Erfindung betrifft eine elektrische Heizeinrichtung, insbesondere für einen Haartrockner, welche aus einem ersten und einem zweiten Drahtheizelement besteht. Das erste Drahtheizelement ist insbesondere ein Wendeldrahtheizelement mit einem aus wenigstens einer Trägerplatte bestehenden Heizleiterträger und einer auf diesem angeordneten Heizleiterwicklung und ist zur Erwärmung der den Haartrockner durchströmenden Luft vorgesehen. Das zweite Drahtheizelement ist zur Anpassung der elektrischen Spannung für einen weiteren elektrischen Verbraucher, insbesondere als Vorwiderstand, beispielsweise für einen den Luftstrom erzeugenden mit einem Lüfterrad versehenen Gleichstrommotor vorgesehen.

Elektrische Haartrockner werden größtenteils mit elektrischer Netzspannung, d.h. je nach Land mit einer Spannung zwischen ca. 100 - 240 Volt betrieben. Die elektrische Heizeinrichtung in einem Haartrockner wird üblicherweise direkt an Netzspannung angeschlossen. Ein in dem Haartrockner vorgesehener und mit einem Lüfterrad versehener Motor, meist ein Gleichstrommotor, ist jedoch meist nur mit einer gegenüber der Netzspannung wesentlich geringeren Spannung betreibbar. Daher ist in den Haartrocknern eine Einrichtung zur Anpassung, insbesondere zur Reduzierung der elektrischen Spannung für den Gleichstrommotor vorgesehen. Aus dem Stand der Technik ist es allgemein bekannt, beispielsweise eine zweite Heizleiterwicklung parallel zur ersten als Vorwiderstand für den Gleichstrommotor auszubilden oder auch einen anders ausgebildeten Widerstand mit der Heizeinrichtung zu verbinden, um eine entsprechende Motorspannung bereitzustellen.

Aus der JP 62-14807 ist eine elektrische Heizeinrichtung mit den oben beschriebenen Merkmalen bekannt, welche ein erstes Heizelement zur Erwärmung der den Trockner durchströmenden Luft aufweist. Ein zweites Drahtheizelement ist zwischen Lüftermotor und Heizung angeordnet und zur Reduzierung der elektrischen Spannung für den Lüftermotor ausgebildet. Das zweite Drahtheizelement gemäß dieser Schrift besteht aus einem bandförmigen Träger, der auf seiner Oberfläche mit einem Heizleiter umwickelt ist. Der Träger kann anschließend, nach dem Umwickeln mit Heizdraht, in eine U-, eine Kreisring oder ähnliche Form gebogen werden, wobei die Heizleiterwicklungen im wesentlichen parallel zur Hauptströmungsrichtung verlaufen.

Bei den Heizeinrichtungen gemäß Stand der Technik hat sich gezeigt, daß für die bislang bekannten Ausführungsformen eines Vorwiderstandes, beispielsweise für einen Gleichstrommotor, eine Verbesserung der Flexibilität bei unterschiedlichen Fertigungsbedingungen, beispielsweise eine schnelle Anpassung der elektrischen Bauteile an die jeweils vorgegebene Netzspannung und somit auch eine Reduzierung der Herstellkosten wünschenswert ist.

Aufgabe der vorliegenden Erfindung ist es daher, eine neuartige verbesserte Heizeinrichtung mit einem Vorwiderstand, beispielsweise in Form eines zweiten Drahtheizelementes für einen Gleichstrommotor anzugeben, welche eine flexible Fertigung sowie eine kostengünstige Herstellung ermöglicht. Weiterhin soll insbesondere für einen Haartrockner mit einer Kühlstufe ein Vorwiderstand angegeben werden, welcher eine möglichst niedrige Luftaustrittstemperatur ermöglicht.

Erfindungsgemäß wird diese Aufgabe bei einer elektrischen Heizeinrichtung der eingangs genannten Art durch die Merkmale des kennzeichnenden Teils des Patentanspruchs 1 gelöst. Dieser sieht vor, daß das zweite Heizelement mit einem rahmenartigen Heizleiterträger und einer darauf angeordneten Heizleiterwicklung ausgebildet ist, welche den freien Querschnitt des Heizleiterträgers ausfüllt und daß das zweite Heizelement an dem ersten Heizelement befestigbar ist. Durch diese Kombination einer Wendeldrahtheizung mit einem zweiten Heizelement mit einem rahmenartigen Heizleiterträger - nachfolgend auch kurz Rahmenheizung genannt - ist es möglich, eine variable Heizeinrichtung in Modulbauweise für eine automatisierte Fertigung anzugeben, welche eine große von dem Heizleiter bedeckte Querschnittsfläche aufweist. Durch die relativ große Querschnittsfläche, welche im wesentlichen quer zur Hauptströmungsrichtung angeordnet ist, wird vorteilhafterweise eine nahezu gleichmäßige Temperaturverteilung über den gesamten luftdurchströmbaren Querschnitt erreicht und somit eine nur sehr geringe Erwärmung des aus dem Haartrockner austretenden Luftstroms beim Betrieb dieser Rahmenheizung errreicht. Andererseits stellt dieser modulare Aufbau der Wendel- und Rahmenheizung eine kostengünstige Lösung zur Herstellung einer elektrischen Heizeinrichtung dar. Besonders vorteilhaft kann eine solche Kombination aus einem Wendel-Drahtheizelement und einer Rahmenheizung in einem Haartrockner mit einer Kühlstufe eingesetzt werden, da diese Rahmenheizung als Vorwiderstand für den Motor eine im Verhältnis zur Gesamtheizleistung des Haartrockners nur geringe Erwärmung des aus dem Haartrockner austretenden Luftstroms bewirkt. Durch die Befestigung des zweiten Heizelements, insbesondere der Rahmenheizung an dem ersten Heizelement, d.h. der Wendeldrahtheizung wird vorteilhafterweise eine Baugruppe hergestellt, welche vor dem Einsatz in den Haartrockner als separate Baugruppe vormontiert werden kann.

Es wird weiter vorgeschlagen, das zweite Heizelement innerhalb der Außenkontur des ersten Heizelementes anzuordnen. Dadurch wird vorteilhafterweise kein wesentlicher zusätzlicher Bauraum in einem Haartrockner für das zweite Heizelement benötigt. Andererseits kann die Rahmenheizung jedoch nahezu die gesamte Querschnittsfläche des ersten Heizelementes, der Wendelheizung beanspruchen. Da der Heizleiter somit vollständig in dem Luftstrom angeordnet und von der strömenden Luft umspült wird, erfährt dieser eine größtmögliche Kühlung. Daher können bei der Auswahl der Heizleiterdrähte für das zweite Heizelement - die Rahmenheizung - Heizleiterdrähte mit einer geringen Querschnittsfläche und einer großen thermischen Oberflächenbelastung gewählt werden.

Bei einer vorteilhaften Ausgestaltung der Heizeinrichtung weist der Heizleiterträger des ersten Heizelementes schlitzartige Ausnehmungen auf, in welche das zweite Heizelement einsetzbar ist. Dies ist eine einfache kostengünstige Lösung zur Verbindung des ersten und zweiten Heizelements, da diese Schlitze bei der Herstellung der Trägerplatten des ersten Heizelementes in einem Arbeitsgang mit ausgestanzt werden können.

Vorteilhafterweise sind die schlitzartigen Ausnehmungen in den Trägerplatten des ersten Heizelementes im wesentlichen quer zu seiner Haupterstreckungsrichtung angeordnet, wodurch vorteilhafterweise die größtmögliche Fläche der Heizleiterwicklung der Rahmenheizung innerhalb des Luftstroms ausgenutzt wird.

In einer besonderen Ausbildung der Trägerplatten des ersten Heizelements ist wenigstens eine der schlitzartigen Ausnehmungen mit einem offenen und einem geschlossenen Ende ausgebildet. Dadurch wird vorteilhafterweise das zweite Drahtheizelement in das offene Ende des Schlitzes eingeschoben und bis zu dem geschlossenen Ende bewegt, welches als Anschlag für die Rahmenheizung wirkt. Somit ist vorteilhafterweise eine einfache und kostengünstige Ausbildung der Halterung für die Rahmenheizung und eine einfache Montage der Rahmenheizung innerhalb des Wendel-Drahtheizelements vorgeschlagen.

In einer vorteilhaften Weiterbildung der Heizeinrichtung wird vorgeschlagen, daß die Rahmenheizung wenigstens einen Steckkontakt aufweist, welcher beim Einschieben der Heizung in den Schlitz des Heizleiterträgers mit einem korrespondierenden Kontakt am Heizleiterträger des ersten Heizelements elektrisch verbindbar ist. Dadurch wird eine Verbindungsmöglichkeit geschaffen, welche vorteilhafterweise eine getrennte Vorfertigung des ersten und zweiten Heizelements und anschließend eine einfache Montage des zweiten rahmenförmigen Heizelements in das erste Heizelement ermöglicht. Durch den Steckkontakt zwischen dem ersten und zweiten Heizelement ist somit auf einfachste Weise direkt beim Einschieben der Rahmenheizung eine elektrische Verbindung zu dem ersten Heizelement hergestellt, welche auch für eine automatisierte Fertigung geeignet ist und eine nachträglich anzubringende elektrische Verbindung, beispielsweise durch Litzen nicht mehr erforderlich macht.

In einer weiteren vorteilhaften Ausgestaltung der Erfindung wird vorgeschlagen, den Heizleiterträger des zweiten Heizelements, bzw. der Rahmenheizung aus einem rechteckigen, insbesondere einem quadratischen Rahmen herzustellen. Mit einem so geformten Rahmen wird ein Heizelement gebildet, welches einerseits flexibel ist für die Anordnung unterschiedlicher Heizleiterwicklungen, d.h. daß der Heizleiter sowohl in verschiedenen Drahtstärken, als auch in verschiedenen Längen auf den Rahmen aufwickelbar ist. Andererseits wird durch die quadratische Rahmenform eine größtmögliche Fläche der Rahmenheizung angegeben, welche in dem Luftstrom mit meist runder Querschnittsfläche angeordnet werden kann. Dadurch kann in besonders vorteilhafter Weise durch die Rahmenheizung erzeugte Wärmemenge besonders gleichmäßig an den Luftstrom abgegeben werden, so daß der Luftstrom eine von dem Benutzer kaum spürbare Temperaturerhöhung erfährt.

In einer weiteren Ausbildung der Erfindung wird vorgeschlagen, die Heizleiterwicklung des zweiten Heizelementes mit einem Spannungsabgriff, beispielsweise zur Spannungsversorgung des Gleichstrommotors auszurüsten. Damit wird vorteilhafterweise ein weiterer Spannungsteiler innerhalb der Rahmenheizung zur Versorgung des Motors vorgeschlagen, welcher auch zur Spannungsversorgung eines mit dem Haartrockner betreibbaren Zusatzwerkzeug verbindbar ist.

Bei einer vorteilhaften Weiterbildung der Erfindung ist das zweite Heizelement, die Rahmenheizung, mit einem Gleichrichter und einem Gleichstrommotor in Reihe geschaltet und elektrisch mit einem Netzschalter verbunden. Durch diese Reihenschaltung ist die als Vorwiderstand wirkende Rahmenheizung ständig mit dem Gleichstrommotor verbunden, so daß beim Einschalten des Gerätes die anliegende Netzspannung vorteilhafterweise direkt durch die Rahmenheizung auf einen Spannungswert reduziert wird, welcher zum Betrieb des Gleichstrommotors erforderlich ist, ohne daß das Wendel-Drahtheizelement des Haartrockners zum Betrieb des Motors erforderlich wäre.

Das erste Heizelement, bzw. Wendel-Drahtheizelement wird nun parallel zu der Rahmenheizung, dem Gleichrichter und dem Gleichstrommotor geschaltet und ist durch einen separaten Schalter von den anderen Bauteilen trennbar. Damit kann die Wendelheizung vorteilhafterweise direkt durch den Benutzer, dem den Luftstrom erzeugenden Gleichstrommotor wahlweise zu- oder weggeschaltet werden, je nach Bedarf, ob ein warmer oder ein kühler Luftstrom gewünscht wird.

Vorteilhaft ist ferner die Ausbildung des separaten Schalters als Tastschalter, so daß dieser im unbetätigten Zustand eine elektrische Verbindung zwischen der Rahmen- und der Wendelheizung herstellt. Damit erzeugt die elektrische Heizeinrichtung des Haartrockners üblicherweise einen permanent warmen Luftstrom. Bei Betätigung des Tastschalters durch den Benutzer wird die elektrische Verbindung zur Wendelheizung unterbrochen und somit vorteilhafterweise eine Kühlstufe des Haartrockners ermöglicht, welche einen nur gering erwärmten, von dem Benutzer meist als kühl empfundenden Luftstrom erzeugt.

In einer weiteren, besonders vorteilhaften Weiterbildung der Erfindung gemäß anspruch 12, welche auch eine eigenständige Erfindung darstellen kann, ist das zweite Draht-Heizelement, die Rahmenheizung, zur Anpassung der elektrischen Spannung für ein Zusatzwerkzeug vorgesehen, welches mit dem, diese Heizeinrichtung enthaltenden Haartrockner verbindbar ist. Elektrisch betriebene Werkzeuge, insbesondere zur Haarformung und/oder -trocknung, welche mit der Luftauslaßöffnung eines Haartrockners verbunden werden, sind an sich bereits bekannt. Diese Werkzeuge weisen einen elektrischen Verbraucher auf, welcher üblicherweise mit einer von der Netzspannung verschiedenen, meist niedrigeren elektrischen Spannung betrieben wird. Somit kann vorteilhafterweise die erfindungsgemäße Kombination eines ersten mit einem zweiten Draht-Heizelementes zum einen als Heizung für den Haartrockner und zum anderen als Vorwiderstand für einen in dem Zusatzwerkzeug vorgesehenen elektrischen Verbraucher, beispielsweise einem Gleichstrommotor verwendet werden.

Besonders vorteilhaft ist die Ausbildung eines elektrischen Haartrockners, welcher eine elektrische Heizeinrichtung mit den oben beschriebenen Merkmalen enthält.

Weitere Merkmale, Vorteile und Anwendungsmöglichkeiten der Erfindung ergeben sich aus der nachfolgenden Beschreibung von Ausführungsbeispielen, die in den Zeichnungen näher dargestellt sind. Dabei bilden allen beschriebenen und/oder bildlich dargestellten Merkmale für sich oder in beliebiger Kombination den Gegenstand der Erfindung, unabhängig von ihrer Zusammenfassung in den Ansprüchen und deren Rückbeziehung.

### Es zeigt:

- Fig. 1: eine elektrische Heizeinrichtung für einen Haartrockner mit einem Wendel- und einem Rahmen-Heizelement in perspektivischer Darstellung und
- Fig. 2: eine elektrische Heizeinrichtung in Seitenansicht entsprechend Blickrichtung X in Fig. 1.

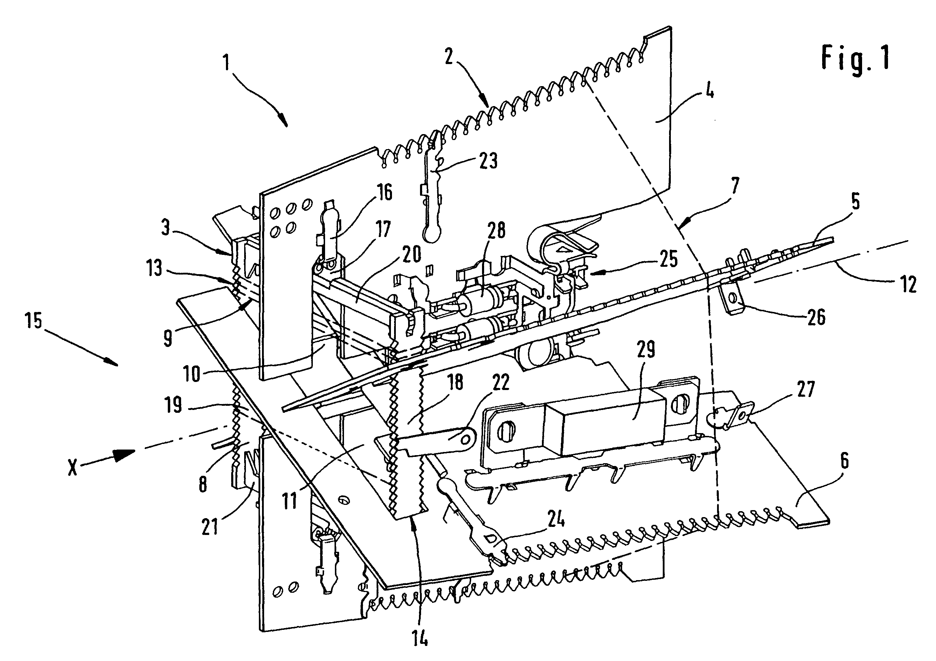

Eine erfindungsgemäße elektrische Heizeinrichtung 1 (Fig. 1) insbesondere für einen Haartrockner besteht aus einem ersten Heizelement, in Form eines Wendel-Drahtheizelementes 2 und einem zweiten Heizelement, in Form eines Rahmen-Drahtheizelementes 3, welches in Strömungsrichtung gesehen hinter der Heizwendel angeordnet ist. Das Wendel-Drahtheizelement besteht aus drei Trägerplatten 4, 5 und 6, welche zusammen einen Heizleiterträger bilden. Eine Heizleiterwicklung 7, welche in Fig. 1 der Einfachheit halber nur schematisch dargestellt ist, ist auf die Außenkanten der Trägerplatten 4, 5 und 6 aufgewickelt.

Die Rahmenheizung 3 besteht aus einem Heizleiterträger 8 sowie einer Heizleiterwicklung 9. Der Heizleiterträger 8 wiederum besteht aus zwei gleichen Trägern 18 und 19 aus Isolierstoff, welcher an ihren Längskanten mit Einkerbungen zur Aufnahme der Heizleiterwicklung 9 ausgebildet sind. Die Träger 18 und 19 sind durch zwei Stege 20 und 21 so beabstandet gehalten, daß der dadurch gebildete freie Querschnitt des rahmenförmigen Trägers 8 eine quadratische Fläche aufweist. Dieser gesamte freie Querschnitt des Trägers 8 ist gitterartig durch die Heizleiterwicklung 9 ausgefüllt, welche der besseren Übersicht wegen nur schematisch dargestellt ist.

Die Trägerplatten 4, 5, 6 sind an ihrem, in Strömungsrichtung betrachtet, hinteren Ende mit Schlitzen 10 und 11 versehen, welche quer zur Hauptachsenrichtung 12 der Wendelheizung 2 angeordnet sind. Der Schlitz 11 in der Trägerplatte 6 weist an einer Längsseite der Platte 6 ein offenes Ende 13 und an der gegenüberliegenden Längsseite ein geschlossenes Ende 14 auf. Die Rahmenheizung 3 kann so in Montagerichtung 15 quer zur Hauptachse 12 der Wendelheizung 2 in den Schlitz 11 eingeschoben werden, wobei das geschlossene Ende 14 des Schlitzes 11 als Anschlag wirkt. Durch einen Schnappkontakt 17 an dem oberen Steg 20 der Rahmenheizung 3 verrastet die Rahmenheizung 3 beim Einschieben auf einfache Weise mit einem Gegenkontakt 16 an der Trägerplatte 4. Dadurch wird beim Einschieben der Rahmenheizung 3 eine mechanische und elektrische Verbindung hergestellt.

An dem vorderen Träger 18 der Rahmenheizung 3 kann optional ein Spannungsabgriff 22 angebracht sein. An den Trägerplatten 4 und 6 ist der Heizleiter 7 jeweils mit den Spannungsabgriffen 23 und 24 elektrisch verbunden. An der Trägerplatte 4 ist ferner ein Verbundkontaktelement 25 vorgesehen, welches einerseits mit den Spannungsabgriffen 23, 24 und andererseits mit einer Spannungsversorgung der Heizeinrichtung 1 oder auch einem weiteren elektrischen Verbraucher, beispielsweise einem Gleichstrommotor verbunden sein kann. Auf dem Verbundkontaktelement 25 ist ferner ein Gleichrichter 28 angeordnet. An den Trägerplatten 5 und 6 ist stirnseitig je ein Kontakt 26 und 27 zur weiteren elektrischen Verbindung der Heizeinrichtung 1 befestigt. Auf der Trägerplatte 6 ist weiterhin ein Thermoschalter 29 angebracht, welcher als Überhitzungsschutz für die Heizeinrichtung 1 wirkt.

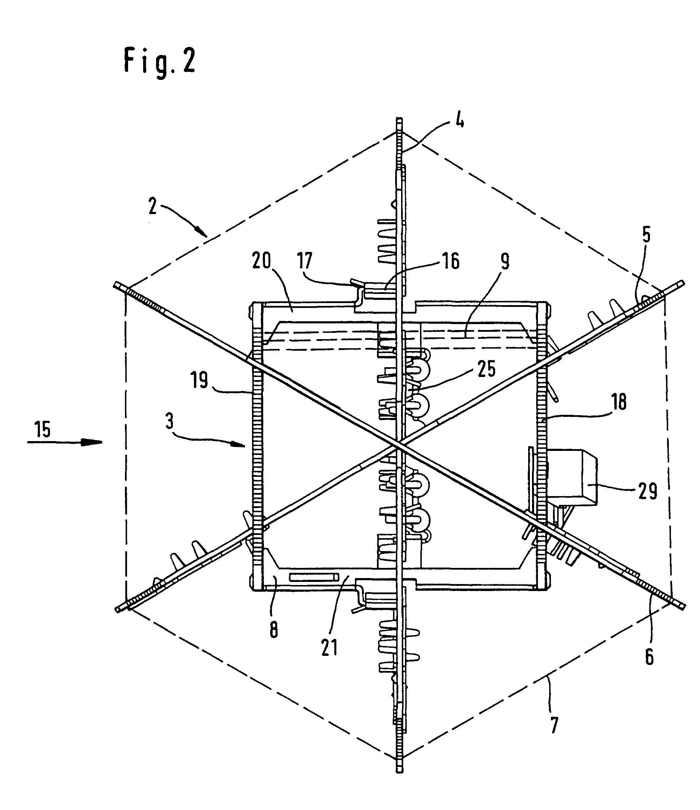

Eine Ansicht X auf die linke Stirnseite der Heizeinrichtung 1 ist in Fig. 2 dargestellt.

Diese zeigt die sternförmige Anordnung der Trägerplatten 4, 5, 6, welche mit dem Heizleiter 7 umwickelt sind. Ein solcher Heizleiterträger für eine erfindungsgemäße Heizeinrichtung kann selbstverständlich auch aus nur einer, zwei oder mehreren Trägerplatten gebildet sein.

In dem Wendelheizelement 2 ist zentrisch die Rahmenheizung 3 mit ihrem quadratischen Heizleiterträger 8 angeordnet und durch die Schnappkontakte 17 mit dem Gegenkontakt 16 verbunden. Die Träger 18, 19, sowie die Stege 20, 21 bilden einen quadratischen Heizleiterträger, dessen freier Querschnitt durch die Heizleiterwicklung 9 gitterförmig ausgefüllt ist. Die Rahmenheizung 3 kann selbstverständlich auch eine andere als die gezeigte quadratische Rahmenform aufweisen, ohne die modulare Bauweise der beiden Heizelement sowie die große, durch die Rahmenheizung erzeugte Querschnittsfläche nachteilig zu beeinflussen.

In einer bevorzugten Ausbildungsform ist die Rahmenheizung 3 (Fig. 1) in Strömungsrichtung gesehen hinter der Heizleiterwicklung 7 angeordnet. Jedoch kann eine Rahmenheizung auch an einer anderen Stelle innerhalb der Heizeinrichtung 1 angeordnet sein. Ebenso ist auch eine Ausbildung einer Heizeinrichtung mit zwei oder mehr als Vorwiderstand für einen Gleichstrommotor wirkenden, Rahmenheizungen möglich. Eine weitere Variation der Widerstandswerte der Rahmenheizung 3 kann durch die Verwendung eines Heizleiterdrahtes 9 mit einem anderen Durchmesser, bzw. anderen Werkstoffkennwerten erreicht werden. Ferner ist die Variation der Steigung, d.h. der Abstand der einzelnen Heizleiterwicklungen 9 ein Parameter zur Beeinflussung des Widerstandswertes der Rahmenheizung 3.

## Patentansprüche

1. Elektrische Heizeinrichtung, insbesondere für einen Haartrockner, bestehend aus einem ersten Draht-Heizelement, insbesondere einem Wendel-Drahtheizelement (2), mit einem aus wenigstens einer Trägerplatte (4, 5, 6) bestehenden Heizleiterträger und einer auf diesem angeordneten Heizleiterwicklung (7) zur Erwärmung durchströmender Luft und wenigstens einem zweiten Draht-Heizelement zur Anpassung der elektrischen Spannung für einen elektrischen Verbraucher, insbesondere als Vorwiderstand, für einen den Luftstrom erzeugenden mit einem Lüfterrad versehenen Gleichstrommotor, **dadurch gekennzeichnet,** daß das zweite Drahtheizelement (3) einen rahmenartigen Heizleiterträger (8) und eine darauf angeordnete Heizleiterwicklung (9) aufweist, welche den freien Querschnitt des Heizleiterträgers (8) ausfüllt und daß das zweite Heizelement (3) an dem ersten Heizelement (2) befestigbar ist.

2. Elektrische Heizeinrichtung nach Anspruch 1, **dadurch gekennzeichnet,** daß das zweite Heizelement (3) innerhalb der Außenkontur des ersten Heizelements (2) angeordnet ist.

3. Elektrische Heizeinrichtung nach einem der Ansprüche 1 oder 2, **dadurch gekennzeichnet,** daß der Heizleiterträger des ersten Heizelements (2) schlitzartige Ausnehmungen (10, 11) aufweist und das zweite Heizelement (3) in diesen Ausnehmungen (10, 11) gehalten wird.

4. Elektrische Heizeinrichtung nach einem der vorhergehenden Ansprüche, **dadurch gekennzeichnet,** daß die schlitzartigen Ausnehmungen (10, 11) im wesentlichen quer zur Haupterstreckungsrichtung (12) des ersten Heizelementes (2) angeordnet sind.

5. Elektrische Heizeinrichtung nach einem der vorhergehenden Ansprüche, **dadurch gekennzeichnet,** daß wenigstens eine der Trägerplatten (6) eine schlitzartige Ausnehmung (11) mit einem offenen und einem geschlossenen Ende (13, 14) aufweist, wobei das zweite Drahtheizelement (3) in das offene Ende (13) der schlitzartigen Ausnehmungen (11) einschiebbar ist und das geschlossene Ende (14) einen Anschlag für das zweite Heizelement (3) bildet.

6. Elektrische Heizeinrichtung nach einem der vorhergehenden Ansprüche, **dadurch gekennzeichnet,** daß das zweite Heizelement (3) wenigstens einen Steckkontakt (17) aufweist, der beim Einschieben des zweiten Heizelementes (3) in die schlitzartige Ausnehmung (11) mit einem korrespondierenden Kontakt (16) am Heizleiterträger des ersten Heizelementes (2) elektrisch verbindbar ist.

7. Elektrische Heizeinrichtung nach einem der vorhergehenden Ansprüche, **dadurch gekennzeichnet,** daß der Heizleiterträger (8) des zweiten Heizelementes (3) aus einem rechteckigen, insbesondere einem quadratischen Rahmen (18, 19, 20, 21) besteht.

8. Elektrische Heizeinrichtung nach einem der vorhergehenden Ansprüche, **dadurch gekennzeichnet,** daß die Heizleiterwicklung (9) des zweiten Heizelementes (3) mit einem Spannungsabgriff (22) verbunden ist, beispielsweise zur Spannungsversorgung eines Gleichstrommotors oder eines mit dem Haartrockner verbindbaren Zusatzwerkzeuges, welches einen elektrischen Verbraucher aufweist.

9. Elektrische Heizeinrichtung nach einem der vorhergehenden Ansprüche, **dadurch gekennzeichnet,** daß das zweite Heizelement (3) mit einem Gleichrichter (28) und einem Gleichstrommotor in Reihe geschaltet und mit einem Netzschalter elektrisch verbunden ist.

10. Elektrische Heizeinrichtung nach einem der vorhergehenden Ansprüche, **dadurch gekennzeichnet,** daß das erste Heizelement (2) parallel zu dem zweiten Heizelement (3), dem Gleichrichter (28) und dem Gleichstrommotor geschaltet ist und durch einen separaten Schalter von dem zweiten Heizelement (3), dem Gleichrichter (28) und dem Gleichstrommotor trennbar ist.

11. Elektrische Heizeinrichtung nach einem der vorhergehenden Ansprüche, **dadurch gekennzeichnet**, daß der separate Schalter ein Tastschalter ist.

12. Elektrischer Haartrockner, **dadurch gekennzeichnet,** daß er eine elektrische Heizeinrichtung (1) nach einem der vorhergehenden Ansprüche enthält.

13. Elektrischer Haartrockner nach Anspruch 12, **dadurch gekennzeichnet,** daß das zweite Draht-Heizelement zur Anpassung der elektrischen Spannung für ein Zusatzwerkzeug vorgesehen ist, welches mit dem, die Heizeinrichtung enthaltenden Haartrockner verbindbar ist.

## Claims

1. An electrical heating unit, particularly for a hair drier, comprising a first wire heating element, in particular a spiral coil wire heating element (2) having a heat conductor support comprising at least one support plate (4, 5, 6) and a heat conductor winding (7) arranged thereon for heating air passing through, and at least one second wire heating element for adapting the electrical voltage for an electrical load, particularly as a series resistor, for a direct-current motor fitted with an impeller to produce the stream of air, **characterized in that** the second wire heating element (3) comprises a frame-type heat conductor support (8) and a heat conductor winding (9) arranged thereon which fills the free area of cross section of the heat conductor support (8), and that the second heating element (3) is attachable to the first heating element (2).

2. The electrical heating unit as claimed in claim 1, **characterized in that** the second heating element (3) is arranged within the outer contour of the first heating element (2).

3. The electrical heating unit as claimed in any one of the claims 1 or 2, **characterized in that** the heat conductor support of the first heating element (2) is provided with slot-type recesses (10, 11), and that the second heating element (3) is held in said recesses (10, 11).

4. The electrical heating unit as claimed in any one of the preceding claims, **characterized in that** the slot-type recesses (10, 11) are arranged essentially transversely to the main extension (12) of the first heating element (2).

5. The electrical heating unit as claimed in any one of the preceding claims, **characterized in that** at least one of the support plates (6) has a slot-type recess (11) with an open and a closed end (13, 14), with the second wire heating element (3) being insertable into the open end (13) of the slot-type recess (11), and the closed (14) end providing a stop for the second heating element (3).

6. The electrical heating unit as claimed in any one of the preceding claims, **characterized in that** the second heating element (3) includes at least one male contact member (17) which can be electrically connected to a female contact member (16) on the heat conductor support of the first heating element (2) when the second heating element (3) is introduced into the slot-type recess (11).

7. The electrical heating unit as claimed in any one of the preceding claims, **characterized in that** the heat conductor support (8) of the second heating element (3) is a rectangular, in particular a square frame structure (18, 19, 20, 21).

8. The electrical heating unit as claimed in any one of the preceding claims, **characterized in that** the heat conductor winding (9) of the second heating element (3) is provided with a voltage tap (22), for example for the supply of power to a direct-current motor or to an attachment attachable to the hair drier and having an electrical load.

9. The electrical heating unit as claimed in any one of the preceding claims, **characterized in that** the second heating element (3) is connected in series with a rectifier (28) and a direct-current motor, and electrically connected to a power switch.

10. The electrical heating unit as claimed in any one of the preceding claims, **characterized in that** the first heating element (2) is connected in parallel to the second heating element (3), the rectifier (28) and the direct-current motor, and can be disconnected from the second heating element (3), the rectifier (28) and the direct-current motor by means of a separate switch.

11. The electrical heating unit as claimed in any one of the preceding claims, **characterized in that** the separate switch as a push-button switch.

12. An electrical hair drier, **characterized in that** it comprises an electrical heating unit (1) according to any one of the preceding claims.

13. The electrical hair drier as claimed in claim 12, **characterized in that** the second wire heating element is provided for adaptation of the electrical voltage supplied to an attachment attachable to the hair drier equipped with said heating unit.

## Revendications

1. Dispositif de chauffage électrique, notamment pour un sèche-cheveux, constitué par un élément de chauffage formé d'un fil, notamment un élément de chauffage formé d'un fil de forme hélicoïdale, comportant un support de conducteur de chauffage, constitué par au moins une plaque de support (4,5,6) et un enroulement de conducteur de chauffage (7) disposé sur ce support et servant à chauffer un air traversant, et au moins un deuxième élément de chauffage en forme de fil servant à adapter la tension électrique pour un appareil d'utilisation électrique, notamment en tant que résistance additionnelle, pour un moteur à courant continu produisant le courant d'air et comportant une roue de ventilateur, caractérisé en ce que le deuxième élément de chauffage en forme de fil (3) possède un support de conducteur de chauffage (8) en forme de cadre et un enroulement de conducteur de chauffage (9) disposé sur ce support et qui remplit la section transversale libre du support de conducteur de chauffage (8) et que le deuxième élément de chauffage (3) peut être fixé au premier élément de chauffage (2).

2. Dispositif de chauffage électrique selon la revendication 1, caractérisé en ce que le deuxième élément de chauffage (3) est disposé à l'intérieur du contour extérieur du premier élément de chauffage (2).

3. Dispositif de chauffage électrique selon l'une des revendications 1 ou 2, caractérisé en ce que le support de conducteur de chauffage du premier élément de chauffage (2) comporte des évidements en forme de fentes (10,11) et que le second élément de chauffage (3) est retenu dans ces évidements (10, 11).

4. Dispositif de chauffage électrique selon l'une des revendications précédentes, caractérisé en ce que les évidements en forme de fentes (10, 11), sont disposés essentiellement transversalement par rapport à la direction d'étendue principale (12) du premier élément de chauffage (2).

5. Dispositif de chauffage électrique selon l'une des revendications précédentes, caractérisé en ce qu'au moins l'une des plaques de support (6) possède un évidement en forme de fente (11) possédant une extrémité ouverte et une extrémité fermée (13,14), le deuxième élément de chauffage en forme de fil (3) pouvant être inséré dans l'extrémité ouverte (13) des évidements en forme de fentes (11) et l'extrémité fermée (14) formant une butée pour le deuxième élément de chauffage (3).

6. Dispositif de chauffage électrique selon l'une des revendications précédentes, caractérisé en ce que le deuxième élément de chauffage (3) comporte au moins un contact enfichable (17) qui, lors de l'insertion du deuxième élément de chauffage (3), peut être relié électriquement, dans l'évidement en forme de fente (11), à un contact correspondant (16) sur le support de conducteur de chauffage du premier élément de chauffage (2).

7. Dispositif de chauffage électrique selon l'une des revendications précédentes, caractérisé en ce que le support (8) de conducteur de chauffage du deuxième élément de chauffage (3) est constitué par un cadre rectangulaire, notamment un cadre carré (18,19,20,21).

8. Dispositif de chauffage électrique selon l'une des revendications précédentes, caractérisé en ce que l'enroulement (9) du conducteur de chauffage du deuxième élément de chauffage (3) est relié à une prise de tension (22), par exemple pour l'alimentation en tension d'un moteur à courant continu ou d'un outil auxiliaire pouvant être relié au sèche-cheveux, qui comporte un appareil d'utilisation électrique.

9. Dispositif de chauffage électrique selon l'une des revendications précédentes, caractérisé en ce que le deuxième élément de chauffage (3) est branché en série avec un redresseur (28) et un moteur à courant continu et est relié électriquement à un interrupteur du réseau.

10. Dispositif de chauffage électrique selon l'une des revendications précédentes, caractérisé en ce que le premier élément de chauffage (2) est branché en parallèle avec le deuxième élément de chauffage (3), le redresseur (28) et le moteur à courant continu et peut être séparé, par un interrupteur séparé, du deuxième élément de chauffage (3), du redresseur (28) et du moteur à courant continu.

11. Dispositif de chauffage électrique selon l'une des revendications précédentes, caractérisé en ce que l'interrupteur séparé est un interrupteur à bouton-poussoir.

12. Sèche-cheveux électrique, caractérisé en ce qu'il contient un dispositif de chauffage électrique (1) selon l'une des revendications précédentes.

13. Sèche-cheveux électrique selon la revendication 12, caractérisé en ce que le deuxième élément de chauffage formé d'un fil est prévu pour l'adaptation de la tension électrique pour un outil auxiliaire, qui peut être relié au sèche-cheveux qui contient le dispositif de chauffage.
